(19) Europäisches Patentamt
European Patent Office
Office européen des brevets

(11) Veröffentlichungsnummer : **0 149 837**
**B1**

# (12) EUROPÄISCHE PATENTSCHRIFT

(45) Veröffentlichungstag der Patentschrift : **02.03.88**

(51) Int. Cl.[4] : **C 09 J 3/16**, C 08 G 69/44

(21) Anmeldenummer : **84116129.2**

(22) Anmeldetag : **21.12.84**

## (54) Wärmehärtbare Klebstoff- und Dichtungsmassen.

(30) Priorität : **24.01.84 DE 3402280**

(43) Veröffentlichungstag der Anmeldung : **31.07.85 Patentblatt 85/31**

(45) Bekanntmachung des Hinweises auf die Patenterteilung : **02.03.88 Patentblatt 88/09**

(84) Benannte Vertragsstaaten : **AT BE DE FR GB IT NL SE**

(56) Entgegenhaltungen : **FR-A- 2 083 392**

(73) Patentinhaber : **DYNAMIT NOBEL AKTIENGESELLSCHAFT**
**Postfach 1261**
**D-5210 Troisdorf, Bez. Köln (DE)**

(72) Erfinder : **Huber, Hans, Dr.**
**Adenauerstrasse 32**
**D-5210 Troisdorf-Spich (DE)**
Erfinder : **Vollkommer, Norbert, Dr.**
**Schumannstrasse 5,**
**D-5210 Troisdorf-Kriegsdorf (DE)**

**EP 0 149 837 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft wärmehärtbare Klebstoff- und Dichtungsmassen der in Anspruch 1 angegebenen Zusammensetzung.

Es ist bekannt, Carboxylgruppen mit Oxazolingruppen unter Öffnung des Oxazolinrings und Addition unter Bildung einer Esteramidgruppe umzusetzen :

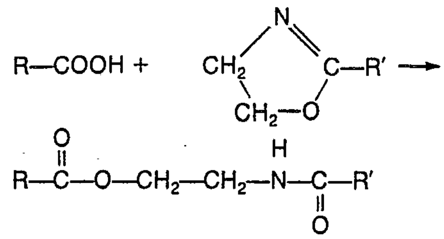

(1)

In dieser Reaktionsgleichung bedeuten R und R′ beliebige organische Reste.

Die Reaktion (1) verläuft mit einer für präparative Zwekke ausreichenden Geschwindigkeit oberhalb 120 °C. Sie wurde für technische Zwecke nutzbar gemacht zur Kettenverlängerung von Polyestern (EP-OS 0 020 944, JP-OS 56-18618 (1981), JP-OS 55-145733 (1980)), zur Herstellung von Blockcopolyestern (JP-OS 57-36119 (1982)), zur Stabilisierung von Polyestern durch Säurezahlverminderung, entsprechend einem Endgruppenverschluß (JP-OS 55-161824 (1980)), und zum Einführen von reaktiven Flammschutzmitteln in carboxylgruppenhaltige Formmassen (JP-OS 57-47327 (1982)), vornehmlich jedoch bei der vernetzenden Wärmehärtung von Pulverlacksystemen für die elektrostatische Beschichtung (DE-OS 23 28 012, DE-OS 30 28 477, JP-OS 56-36551 (1981)).

Im letzteren Fall wird ein vorzugsweise verzweigter Polyester mit mehr als 2 Carboxylgruppen je Molekül mit einem bifunktionellen Oxazolin durch Coextrusion in der Schmelze (mit anschließender rascher Abkühlung, um eine vorzeitige Vernetzung zu vermeiden) physikalisch gemischt und nach Vermahlen zu einem Pulver und elektrostatischem Aufbringen auf Metalloberflächen durch Vernetzung gehärtet. Beschrieben sind nur solche Pulverlacksysteme, deren Polyesterkomponente deutlich oberhalb der Raumtemperatur in den plastischen oder flüssigen Zustand übergeht. Solche Systeme sind bei Raumtemperatur lange lagerfähig, ohne daß durch Reaktion der Carboxyl- mit den Oxazolingruppen eine Vernetzung eintritt. Die Ursache für die Unterdrückung der Vernetzungsreaktion und damit für die auch bei Pulverlacken geforderte Lagerstabilität ist, wie ein Vergleich mit den Epoxid-gehärteten Pulverlacksystemen zeigt, in welchen statt der mehrfunktionellen Oxazoline mehrfunktionelle Epoxide mit den carboxylgruppenhaltigen Polyestern zur Vernetzung gebracht werden, die hohe Glasübergangstemperatur der Systeme, welche deutlich oberhalb der Raumtemperatur liegt.

Aus der FR-A-2083 392 ist ein Verfahren zur Herstellung vernetzter Polymerer bekannt, welche Carboxamidgruppen und Carbonsäureestergruppen enthalten. Auch bei diesem Verfahren werden unter anderem Polyester und bifunktionelle Oxazoline als Ausgangsprodukte eingesetzt. Es entstehen hierbei ebenfalls Produkte, die bei Raumtemperatur fest sind.

Die Polyesterkomponenten der obengenannten Pulverlacksysteme sind auf der Basis von Tere- und Isophthalsäure sowie Trimellithsäure als Polycarbonsäuren und von 2,2-Dimethyl-1,3-propandiol (Neopentylglykol, NPG), Äthylenglykol sowie 2-Äthyl-2-hydroxymethyl-1,3-propandiol (Trimethylolpropan, TMP) als Polyolen aufgebaut und weisen Glasübergangstemperaturen im Bereich von 55 bis 65 °C auf. Dies ermöglicht, da die Molekularbewegung eingefroren ist, bei Raumtemperatur die Koexistenz von Carboxyl- und Epoxidgruppen ohne merkliche Reaktion. Werden jedoch Verbindungen mit mehreren Epoxidgruppen in bei Raumtemperatur halbfeste oder flüssige carboxylgruppenhaltige Polyester mit einer Glasübergangstemperatur unterhalb Raumtemperatur eingearbeitet, so tritt Reaktion zwischen den Carboxyl- und den Epoxidgruppen ein und das System neigt, je nach Funktionalität der reagierenden Gruppen und Anwesenheit, Art sowie Menge eines Katalysators innerhalb von wenigen Tagen bis Wochen zu vorzeitiger Vernetzung.

Aufgabe der Erfindung war es, thermisch härtbare, für Klebstoff- und Dichtungsmassen einsetzbare Bindersysteme zu entwickeln, die folgende Forderungen erfüllen sollten :

1. Es wurden Mischungen gesucht, die arm an oder gänzlich frei von flüchtigen Lösemitteln sind.

2. Die Konsistenz der Produkte sollte pastös oder zähviskos sein, um eine Verarbeitung bei Raumtemperatur oder mäßig erhöhter Temperatur (bis zu 100 °C) zu ermöglichen.

3. Eine weitere Forderung an das Klebe- und Abdichtungssystem besteht darin, daß es sich um ein Einkomponentensystem handeln sollte, d. h. die reagierenden Komponenten müssen bei Raumtemperatur als gebrauchsfertige Mischung monatelang im reaktionsfähigen Zustand verbleiben, ohne daß eine fortschreitende Vernetzungsreaktion zu einer wesentlichen Minderung der Verarbeitungs- und Gebrauchseigenschaften führen darf.

Aufgrund der großen Variationsmöglichkeiten der Polyester d. h. der Vielfalt der zu deren Herstellung einsetzbaren Komponenten, ergibt sich auch ein breites Eigenschaftsspektrum der ausgehärteten Produkte. Dementsprechend war auch ein möglichst breites Anwendungsgebiet erwünscht, wie beispielsweise Strukturkleber für die Metallverarbeitung, Kleb- /Dichtmassen, wie sie beispielsweise im Automobilbau zum Einsatz kommen, aber auch weichklebrige Produkte, die als Haftklebstoffe geeignet sind.

Diese Aufgabe wird durch die vorliegende Erfindung gelöst. Die wärmehärtbaren Massen, welche die vorgenannten Bedingungen erfüllen, bestehen aus Polyestern mit einer Glasübergangstemperatur unterhalb 20 °C und Polyoxazolinen mit mindestens zwei Oxazolingruppen je Molekül als Reaktionskomponenten, welche unter Polyadditionsbedingungen vernetzend gehärtet werden.

Es war zu erwarten, daß Einkomponentensysteme, bestehend aus Mischungen von bei Raumtemperatur halbfesten oder flüssigen carboxylgruppenhaltigen Polyestern mit einer Glasübergangstemperatur unterhalb Raumtemperatur und mehrfunktionellen Oxazolinen, nicht die erforderliche Lagerstabilität bei Raumtemperatur aufweisen würden, denn die Reaktivität der Epoxidgruppe (mit der Carboxylgruppe) ist mit derjenigen der Oxazolingruppe vergleichbar. Überdies wurden bisher nur bei Raumtemperatur lagerfähige Carboxylgruppen/Oxazolingruppen-Systeme mit einer Glasübergangstemperatur oberhalb der Raumtemperatur beschrieben. Die Ursache hierfür liegt sicherlich in der befürchteten vorzeitigen Reaktion dieser Systeme, wodurch sie voraussehbar vernetzen und unbrauchbar würden.

Überraschenderweise jedoch erwiesen sich pastenförmige Mischungen aus bei Raumtemperatur flüssigen oder halbfesten carboxylgruppenhaltigen Polyestern und mehrfunktionellen Oxazolinen in verschlossenen Behältern über mehrere Monate hinweg als lagerstabil im Sinne der Vermeidung einer befürchteten vorzeitigen Vernetzung.

Bei Lagerung in offenen Behältern ergibt sich eine verminderte Lagerstabilität der Mischungen aus carboxylgruppenhaltigen Polyestern und mehrfunktionellen Oxazolinen. Diese Verminderung der Lagerstabilität ist jedoch nicht im Sinne einer vorzeitigen Vernetzung, sondern aufgrund einer Empfindlichkeit des Systems gegen Luftfeuchtigkeit. Das Produkt ergibt dann beim an die Verklebung oder Abdichtung anschließenden Härtungsprozeß keine durchgehärtete, zähelastische Klebstoff- oder Dichtungsmasse, sondern nur eine weiche, oberflächenklebrige Masse ohne mechanische Festigkeit.

Mit der Erfindung ist es gelungen, durch zusätzliche Einarbeitung von bis zu 4 Gew.-%, vorzugsweise 1,5 bis 3 Gew.-%, Paraffin, bezogen auf die Gesamtmenge der Mischung, einer auch längere Zeit der Atmosphäre ausgesetzten Klebermischung ein ausgezeichnetes Härtungsverhalten und gute mechanische Eigenschaften im ausgehärteten Zustand zu verleihen.

Als Polyester-Komponenten der erfindungsgemäßen Mischungen werden Polykondensate eingesetzt auf der Basis von aromatischen und aliphatischen Dicarbonsäuren wie Tere- und Isophthalsäure, Glutarsäure, Bernsteinsäure und Adipinsäure, Azelainsäure, Sebacinsäure, Decandicarbonsäure und Dimerfettsäuren (durch Diels-Alder-Reaktion von Linolsäure hergestellt, gegebenenfalls hydriert oder partiell hydriert), welche auch größere Mengen an Trimerfettsäure enthalten können, oder deren polyesterbildenden Derivaten sowie auf der Basis von aliphatischen oder cycloaliphatischen Diolen wie Äthylenglykol, Diäthylenglykol, Neopentylglykol, Butandiol, Hexandiol, Cyclohexandimethanol und gegebenenfalls dreiwertigen Alkoholen, wie Trimethylolpropan. Bevorzugte Polyester sind Polykondensate auf der Basis von Bernsteinsäure, Glutarsäure, Adipinsäure und Dimerfettsäure oder deren Mischungen als Dicarbonsäurekomponenten und von Äthylenglykol, Diäthylenglykol und Neopentylglykol als Diolkomponenten, mit Glasübergangstemperaturen unterhalb 20 °C, bevorzugt unterhalb 10 °C. Die vorzugsweise nach dem Verfahren der Schmelzpolykondensation hergestellten, bei Raumtemperatur flüssigen oder halbfesten oder durch Erwärmen bis 90 °C in den Schmelzzustand überführbaren Polyester besitzen unmittelbar nach der Synthese überwiegend OH-Endgruppen (Hydroxylzahl-Bereich 10 bis 60, vorzugsweise 20 bis 40 mg KOH/g und Säurezahl-Bereich 0 bis 9, vorzugsweise 0 bis 5 mg KOH/g) und besitzen nach dem sog. Aufsäuern mit vorzugsweise Trimellithsäureanhydrid Säurezahl-Bereiche von 20 bis 120, vorzugsweise 40 bis 80 mg KOH/g. Der Vorgang des Aufsäuerns besteht darin, daß die durch Polykondensation erhaltenen Polyesterkomponenten zwecks Einführung von Carboxylgruppen mit einem Säureanhydrid umgesetzt werden. Dabei reagieren die Hydroxylgruppen des Polyesters mit der Säureanhydridgruppe unter Bildung von Carboxylgruppen. Die Reaktion erfolgt bei höherer Temperatur. Bei der vorliegenden Erfindung kann sie vor oder während der Härtung durchgeführt werden. Außer dem genannten Trimellithsäureanhydrid können im Rahmen dieser Erfindung zum Aufsäuern auch andere, gesättigte oder ungesättigte aliphatische, cycloaliphatische oder aromatische Polycarbonsäureanhydride eingesetzt werden, wie z. B. Bernsteinsäure-, Maleinsäure-, Phthalsäure-, Hexahydrophthalsäure- oder Tetrahydrophthalsäureanhydrid.

Die zum Aufsäuern der endständigen Hydroxylgruppen der Polyester mindestens notwendige Menge Trimellithsäureanhydrid (TMSA) wird erfindungsgemäß der durch die Hydroxylzahl des Polyesters gegebenen Menge an OH-Endgruppen stöchiometrisch angepaßt, wobei es sich jedoch im Hinblick auf das Eigenschaftsbild der Klebstoff- und Dichtungsmassen und auch auf deren Härtungsverhalten als vorteilhaft erwiesen hat, einen gegenüber den OH-Endgruppen stöchiometrischen Überschuß an TMSA im Bereich von 1 bis 20, vorzugsweise 5 bis 10, Mol-% einzusetzen, um eine etwas engmaschigere Vernetzung der Massen zu erreichen und um einen sich unter den Reaktionsbedingungen nur ganz unvollständig mit den OH-Gruppen umsetzenden, im vewendeten TMSA gegebenenfalls vorhandenen Anteil von einigen Prozent an freier Trimellithsäure auszugleichen. Das Aufsäuern der bei der Synthese bevorzugt als hydroxylendgruppenhaltige Polyester anfallenden Produkte kann in der üblichen Weise durch Zusatz von TMSA unmittelbar nach der Polykondensation im Reaktionsgefäß im Temperaturbereich 100 bis 200 °C, vorzugsweise 120° bis 180 °C, erfolgen. Es hat sich auch als eine Alternative mit gewissen

Vorteilen erwiesen, auf die Durchführung der Reaktion der Hydroxyl- mit den Anhydridgruppen zu verzichten und das TMSA zusammen mit den übrigen Reaktionskomponenten und Zuschlagstoffen dem hydroxylgruppenhaltigen Polyester nur physikalisch zuzumischen. Unter Härtungsbedingungen erfolgt vor/neben der vorbeschriebenen Vernetzungsreaktion (der Carboxyl- mit den Oxazolingruppen) auch die Addition der TMSA an die Hydroxylendgruppen des Polyesters unter Ausbildung der Carboxylgruppen an diesem.

Die Eigenschaften der nach beiden Verfahrenswegen erhaltenen ausgehärteten Endprodukte sind vergleichbar. Zur Vernetzung der carboxylgruppenhaltigen Polyester werden mehrfunktionelle, vorzugsweise bifunktionelle Oxazoline verwendet, beispielsweise 1,4-Bis-($\Delta^2$-Oxazolinyl-2-)-benzol = p-Phenylen-bis-oxazolin ; 1,3-Bis-($\Delta^2$-oxazolinyl-2)-benzol = m-Phenylen-bis-oxazolin ; 1,2,4-Tris ($\Delta^2$-oxazolinyl-2)-benzol ; Bis-($\Delta^2$-oxazolinyl-2-)-butan = Tetramethylen-bis-oxazolin oder Gemische der genannten mehrfunktionellen Oxazoline.

Stark bevorzugt ist das p-Phenylen-bis-oxazolin.

Die einzusetzende Menge an Bisoxazolin kann im Bereich der aufgrund der Stöchiometrie der Reaktion (1) vorgegebenen Äquivalenz liegen : eine Carboxylgruppe kommt mit einer Oxazolingruppe zur Reaktion.

Im Hinblick auf Härtungsgeschwindigkeit, Aushärtungsgrad, Empfindlichkeit des Systems gegenüber Feuchtigkeit und Zusatzstoffen sowie im Hinblick auf die Endeigenschaften der Klebstoff- und Dichtungsmassen hat es sich jedoch als vorteilhaft erwiesen, einen stöchiometrischen Überschuß an Oxazolingruppen im Bereich 1 bis 30 Mol%, vorzugsweise 15 bis 25 Mol%, gegenüber den Carboxylgruppen zu verwenden.

Außer den Reaktanten carboxylgruppenhaltiger Polyester und mehrfunktionelles Oxazolin sowie dem Zur Stabilisierung erforderlichen Paraffin können den Mischungen noch Zuschlag- bzw. Füllstoffe, wie z. B. Talkum, Ruß zur Herstellung von elektrisch leitfähigen Klebstoff- und Dichtungsmassen, sowie auch reaktive und nichtreaktive Verdünnungsmittel zur Viskositätseinstellung zugesetzt werden. Als reaktive Verdünnungsmittel eignen sich flüssige Verbindungen mit Polyolcharakter, wie Polyäthylen- oder Polypropylenglykole, welche nach dem Aufsäuern mit in die Oxazolin-Vernetzungsreaktion einbezogen werden, oder flüssige Verbindungen mit Dicarbonsäurecharakter, wie Dimerfettsäuren, welche unmittelbar am Vernetzungsmechanismus teilnehmen können.

Auch der Zusatz von (im Sinne der dem System zugrundeliegenden Vernetzungsreaktion) nichtreaktiven Verdünnungsmitteln, wie beispielsweise flüssigen Cumaron/Inden-Harzen, hat sich bewährt.

Die Herstellung der pastenförmigen Klebstoff- und Dichtungsmassen erfolgt in an sich bekannter Weise durch Zumischen des polyfunktionellen Oxazolins und gegebenenfalls der Zuschlagstoffe zum aufgesäuertenund mit dem Paraffin vernetzen Polyester unter guter Durchmischung, vorzugsweise in Knetwerken oder Walzenstühlen.

Die Härtung erfolgt bei Temperaturen oberhalb 100 °C, vorzugsweise im Temperaturbereich 120° bis 180 °C.

Die Härtungszeiten liegen im Bereich 10 min. bis 1 h.

Eine Temperaturbelastung von einigen Stunden oberhalb 180 °C bis zu zwei Stunden bei 240 °C beeinträchtigt die Qualität der Verklebung oder Abdichtung nicht.

Die Haftung der erfindungsgemäßen Klebstoff- und Dichtungsmassen auf Metalloberflächen, insbesondere auch auf nichtentfetteten Stahlblechen, ist ausgezeichnet.

Zur Verwendung der erfindungsgemäßen Mischungen als Haftklebstoffe werden vorteilhaft Polyester mit besonders niedriger Glasumwandlungstemperatur (kleiner oder gleich — 10 °C) eingesetzt. Außerdem wird in der Mehrzahl der Fälle eine niedrigere Vernetzungsdichte als beispielsweise für Strukturkleber notwendig ist, wünschenswert sein. Dies läßt sich zum Beispiel dadurch erreichen, daß nicht alle im Ausgangspolyester vorhandenen Hydroxylgruppen mit TMSA umgesetzt werden und/oder eine geringere Menge Bisoxazolin eingesetzt wird.

Die Aushärtung der Massen erfolgt in diesem Falle unmittelbar nach Beschichtung eines geeigneten Trägermaterials durch kurzes Erhitzen, besonders vorteilhaft durch Bestrahlung mit Infrarotstrahlern. Bei der Herstellung dieser Massen erübrigt sich der Zusatz eines Paraffins, da die als Haftklebstoffe eingesetzten Massen nicht unter Atmosphäreneinfluß gelagert werden.

## Beispiel 1

a) Herstellung der Polyester-Komponente

In einen mit Rührer, Stickstoff-Einleitungsrohr und absteigendem Kühlsystem ausgestatteten Glaskolben werden 243,4 g (2,35 Mol) Adipinsäure und 84,6 g (0,15 Mol) einer durch Diels-Alder-Reaktion aus Linolsäure hergestellten Dimerfettsäure mit 10 Gew.-% Trimeranteil sowie 85,25 g (1,375 Mol) Äthylenglykol, 39 g (0,375 Mol) Neopentylgkykol und 119,4 g (1,125 Mol) Diäthylenglykol sowie 0,54 g Triphenylphosphit als Antioxydans eingewogen. Unter Rühren und Überleiten eines schwachen Stickstoff-Stromes wird jeweils 1 h bei 180 °C, 200 °C und 220 °C und 2 h bei 240 °C unter Abdestillieren des Reaktionswassers verestert. Nach Zusatz von 0,27 g 2-Äthyl-hexandiol-1,3-titanat als Katalysator wird Vakuum angelegt und der Druck binnen 30 min. auf 1 mbar abgesenkt. Die Temperatur wird auf 250 °C

gesteigert, und es wird polykondensiert, bis die nachstehenden Kenndaten erreicht sind.

Es wird ein bei Raumtemperatur zähflüssiger Polyester erhalten mit η sp/c = (reduzierte spezifische Viskosität) 0,5 dl/g ; Säurezahl = 0,2 mg KOH/g und OH-Zahl = 18 mg KOH/g.

b1) Herstellung der Klebstoff- bzw. Dichtungsmasse

90 g des in Beispiel 1a) erhaltenen Polyesters werden auf 170 °C erhitzt und 5,4 g Trimellithsäureanhydrid eingerührt. Nachdem sich das TMSA aufgelöst hat, wird 1,45 g Paraffin mit dem Erweichungsbereich 56 bis 58 °C untergerührt, auf Raumtemperatur abgekühlt und 6,3 g p-Phenylenbisoxazolin (p-PBO) in Pulverform eingerührt.

Es wird eine pastenförmige Klebemasse erhalten.

c1) Verklebung

Nichtentfettetes, 1 mm dickes Stahlblech (St 37) wird mit der Paste teilweise bestrichen und derart überlappt, daß die Klebefläche 5 $cm^2$ beträgt (Überlappungsbreite : 20 mm ; Überlappungslänge : 25 mm) und die Schichtstärke der Klebefuge 0,8 mm ist.

Es wird in einem Umluftofen 20 min. bei 150 °C gehärtet. Zugscherfestigkeit (bei Abzugsgeschwindigkeit 50 mm/min. und Prüftemp. 23 °C) :

2 h nach der Härtung : 220 $N/cm^2$
24 h nach der Härtung : 240 $N/cm^2$
(jeweils Kohäsionsbruch).

Nach Überbrennen, 20 min. bei 180° und 10 min. bei 210 °C, wird eine Zugscherfestigkeit von 265 $N/cm^2$ (Kohäsionsbruch) gefunden (2 h nach der Härtung).

b2) 100 g Polyester aus Beispiel 1a werden unter den unter b1)

genannten Bedingungen mit 7,3 g TMSA aufgesäuert und nach Zusatz von 2,5 g Paraffin mit 8,6 g p-PBO zu einer Paste verrührt.

c2)

Wird die gleiche nichtentfettete Stahlblechsorte mit der gemäß Beispiel 1 b2) erhaltenen Paste verklebt wie unter c1), so werden die nachstehenden Werte der Zugscherfestigkeit erhalten.

2 h nach der Härtung : 256 $N/cm^2$
24 h nach der Härtung : 268 $N/cm^2$
(jeweils Kohäsionsbruch).

Nach Überbrennen, 20 min. bei 180 °C und 10 min. bei 210 °C, wird eine Zugscherfestigkeit von 310 $N/cm^2$ (Kohäsionsbruch) gefunden 2 h nach der Härtung).

c3)

Nach 6-monatiger Lagerung der unter b2) erhaltenen Paste bei Raumtemperatur in einem verschlossenen, zu ca. 50 Vol-% mit Luft gefüllten Gefäß ist die Klebstoff-Paste äußerlich unverändert.

Nach der Verklebung wie unter c2) werden die nachstehenden Werte der Zugscherfestigkeit erhalten :

2 h nach der Härtung : 260 $N/cm^2$
24 h nach der Härtung : 260 $N/cm^2$
(jeweils Kohäsionsbruch).

Nach Überbrennen, 20 min. bei 180 °C und 10 min. bei 210 °C, wird eine Zugscherfestigkeit von 300 $N/cm^2$ (Kohäsionsbruch) gefunden.

## Beispiel 2

a)

Nach der gleichen Rezeptur und Verfahrensweise wie in Beispiel 1 wird ein Polyester mit niedrigerem Molgewicht hergestellt. Er besitzt die Kenndaten :

$\eta\ sp/_c$ = 0,34 dl/g ; Säure-Zahl : 1,5 mg KOH/g ;
OH-Zahl = 26 mg KOH/g.

b1)

100 g des Polyesters aus Beisp. 2a) werden mit 9 g TMSA aufgesäuert, und nach Zusatz von 1,7 g Paraffin und Abkühlen auf Raumtemperatur werden 11,5 g p-PBO eingerührt. Es wird eine pastenförmige

Klebstoffmasse erhalten.

c1)

Nach Verkleben von nichtentfettetem Stahlblech (St 37) wie in Beisp. 1 c1) werden, nach einer Härtung von 20 min. bei 150 °C im Umlufttrockenschrank, nachstehende Zugscherfestigkeiten erreicht.

2 h nach der Härtung : 490 N/cm²
24 h nach der Härtung : 510 N/cm²
3 Tage nach der Härtung : 620 N/cm²
Nach Überbrennen 20 min. bei 180 °C und 10 min. bei 210 °C : 610 N/cm²
(jeweils Kohäsionsbruch).

c2)

Die Klebstoffpaste wird sowohl bei 40 °C für 3 Monate als auch bei Raumtemp. für 6 Monate wie in Beispiel 1 c3) gelagert. Äußerlich ist danach bei keiner der Proben eine Veränderung der Fließfähigkeit, welche auf eine vorzeitige Vernetzung schließen lassen würde, zu erkennen. Die Verklebung von nichtentfettetem Stahlblech unter gleichen Bedingungen wie unter c1) ergibt folgende Werte für die Zugscherfestigkeit.

Klebstoff-Paste, welche 3 Monate bei 40 °C gelagert worden war :
2 h nach der Härtung [1] : 450 N/cm²
24 h nach der Härtung [1] : 430 N/cm².
Nach Überbrennen 20 min. bei 180 °C und 10 min. bei 210 °C : 630 N/cm² (jeweils Kohäsionsbruch).
Klebstoff-Paste, welche 6 Monate bei Raumtemperatur gelagert worden war :
2 h nach der Härtung [1] : 520 N/cm²
24 h nach der Härtung [1] : 560 N/cm².
Nach Überbrennen 20 min. bei 180 °C und 10 min. bei 210 °C : 580 N/cm² (jeweils Kohäsionsbruch).

[1]) 20 min. bei 150 °C im Umlufttrockenschrank

d1)

Wird in die Klebstoff-Paste nach Beisp. 2 b1) noch zusätzlich eine Menge von 15 Gew.-%, bezogen auf die Gesamtmenge der Bestandteile, Mikrotalkum eingerührt und wie vorstehend verklebt, so wird 2 h nach der Härtung (20 min. bei 150 °C) eine Zugscherfestigkeit von 380 N/cm² gemessen.

e1)

Zur Verwendung als Dichtungsmasse wird die Talkum-haltige Paste von Beisp. 2 d1) als raupenförmige Abdichtung auf die Kante der Bördelnaht eines nichtentfetteten Stahlbleches (St 37) aufgetragen und wie nachstehend gehärtet :

20 min. bei 150 °C, 20 min. bei 180 °C und 10 min. bei 210 °C. Es wird eine elastische, nichtporöse und ausgezeichnet haftende Bördelnahtabdichtung erhalten.

## Beispiel 3

a)

In einer Polykondensationsapparatur wird durch Veresterung und Polykondensation von 6 392 g (ca. 47 Mol) eines Dicarbonsäuregemisches der Zusammensetzung 28-33 Gew.-% Bernsteinsäure, 40-45 Gew.-% Glutarsäure und 24-28 Gew.-% Adipinsäure, 1 692 g (3 Mol) einer durch Diels-Alder-Reaktion aus Linolsäure hergestellten Dimerfettsäure mit ca. 5 Gew.-% Trimeranteil sowie 2 170 g (35 Mol) Äthylenglykol und 2 547 g (24 Mol) Diäthylenglykol ein bei Raumtemp. flüssiger Polyester hergestellt und mit den Kenndaten :

$\eta$ sp/c = 0,45 dl/g ; Säure-Zahl = 0,6 mg KOH/g und
OH-Zahl = 22,5 mg KOH/g.

Der im wesentlichen hydroxylgruppenhaltige Polyester wurde nach Zusatz und Einrühren von 200 g Paraffin aus dem Synthesegefäß abgelassen.

b1)

Auf einem Walzenstuhl werden bei einer Walzentemperatur von 50 bis 60 °C 300 g des Polyesters nach Beisp. 3a), 27,4 g TMSA und 30,7 g p-PBO zu einer Paste angerieben. Unter diesen Bedingungen reagiert der Polyester noch nicht mit dem Trimellithsäureanhydrid.

c1)

V2A-Stahlblech, 1,5 mm dick, wird mit der Klebstoff-Paste aus Beisp. 3 b1) teilweise bestrichen und derart überlappt, daß die Klebefläche 5 $cm^2$ beträgt (Überlappungsbreite 20 mm, Überlappungslänge 25 mm) und die Schichtstärke der Klebefuge 1 mm ist. Es wird in einem Umluftofen 20 min. bei 150 °C gehärtet und gegebenenfalls unter den nachstehenden Bedingungen nachgehärtet. Die Ermittlung der Zugscherfestigkeit erfolgte stets 2 h nach der Härtung bzw. Nachhärtung, bei einer Prüftemp. von 23 °C unter einer Abzugsgeschwindigkeit von 50 mm/min.

| | Nachhärtung | Zugscherfestigkeit |
|---|---|---|
| 1. | keine | 3oo $N/cm^2$ |
| 2. | 1 h bei 18o°C | 6oo $N/cm^2$ |
| 3. | 1 h bei 200°C | 61o $N/cm^2$ |
| 4. | 1 h bei 220°C | 42o $N/cm^2$ |
| 5. | 1/2 h bei 24o°C | 33o $N/cm^2$ |

(jeweils Kohäsionsbruch).

c2)

Nach 6-monatiger Lagerung bei Raumtemperatur wie in Beispiel 1 c3) ist die Paste in einem äußerlich unveränderten Zustand. Unter identischen Bedingungen wie unter c1) verklebt und gehärtet bzw. nachgehärtet, werden die folgenden Werte für die Zugscherfestigkeit erhalten :

| | Nachhärtung | Zugscherfestigkeit |
|---|---|---|
| 1. | keine | 34o $N/cm^2$ |
| 2. | 1 h bei 180°C | 58o $N/cm^2$ |
| 3. | 1 h bei 200°C | 56o $N/cm^2$ |
| 4. | 1 h bei 220°C | 53o $N/cm^2$ |
| 5. | 1/2 h bei 240°C | 4oo $N/cm^2$. |

(jeweils Kohäsionsbruch).

d1)

Wird in die Klebstoff-Paste nach Beisp. 3 b1) noch zusätzlich eine Menge von 10 Gew.-% Mikrotalkum, bezogen auf die Gesamtmenge der Bestandteile, eingearbeitet und werden V2A-Stahlbleche wie in c1) verklebt, so wird nach Härtung in einem Umluftofen 20 min. bei 150 °C eine Zugscherfestigkeit von 270 $N/cm^2$ gemessen.

e1)

Zur Verwendung als Dichtungsmasse wird die talkumhaltige Paste von Beisp. 3 d1) als raupenförmige Abdichtung auf die Kante der Bördelnaht eines nichtentfetteten Stahlblechs aufgetragen und wie nachstehend gehärtet :

20 min. bei 150 °C, 20 min. bei 180 °C und 10 min. bei 210 °C. Es wird eine elastische, nichtporöse und ausgezeichnet haftende Bördelnahtabdichtung erhalten.

b2)

300 g des Polyesters nach Beisp. 3a) werden auf 170 °C erwärmt und unter Rühren 25,6 g TMSA hinzugesetzt. Nachdem sich das TMSA im Polyester aufgelöst hat, wird auf Raumtemperatur abgekühlt und 28,6 g m-Phenylenbisoxazolin eingearbeitet.

Es wird eine pastenförmige Klebstoffmasse erhalten.

c3)

Nichtentfettetes Stahlblech (St 37) wird unter Verwendung der in Beisp. 3 b2) hergestellten Klebstoffpaste unter gleichen Bedingungen wie in Beisp. 3 c1) verklebt. Nach der Härtung in einem

Umluftofen, 20 min. bei 150 °C und gegebenenfalls einer Nachhärtung, werden nachstehende Zugscherfestigkeiten erreicht.

| | Nachhärtung | Zugscherfestigkeit |
|---|---|---|
| 1. | keine | 25o N/cm² |
| 2. | 1 h bei 180°C | 31o N/cm² |
| 3. | 1 h bei 200°C | 25o N/cm² |
| 4. | 1/2 h bei 220°C | 13o N/cm². |

Beispiel 4

a)

In einer Polykondensationsapparatur wird durch Veresterung und Polykondensation von 5 984 g (ca. 44 Mol) eines Dicarbonsäuregemisches wie in Beisp. 3 verwendet, 3 384 g (6 Mol) einer durch Diels-Alder-Reaktion aus Linolsäure hergestellten Dimerfettsäure mit ca. 20 Gew.-% Trimeranteil sowie 2 790 g (45 Mol) Äthylenglykol und 1 486 g (14 Mol) Diäthylenglykol ein bei Raumtemperatur flüssiger Polyester hergestellt mit den Kenndaten

$\eta$ sp/$_c$ = 0,28 dl/g ; Säurezahl = 1,0 mg KOH/g.
OH-Zahl-30 mg KOH/g.

b1)

300 g des Polyesters aus Beispiel 4a) werden mit 34 g TMSA aufgesäuert und nach Unterrühren von 7,5 g Paraffin auf Raumtemperatur abgekühlt und 41,6 g p-PBO eingearbeitet. Es wird eine Klebstoff-Paste erhalten.

c1)

Nichtentfettetes Stahlblech (St 37) wird mit der Klebstoff-Paste verklebt wie in Beisp. 1 c1).
Nach der Härtung im Umlufttrockenschrank 20 min. bei 150 °C wird 2 h nach der Härtung eine Zugscherfestigkeit von 340 N/cm² (23 °C ; Abzugsgeschwindigkeit 50 mm/min.) gemessen.
Nach einer Nachhärtung, 20 min. bei 180 °C und 10 min. bei 210 °C, beträgt die Zugscherfestigkeit 620 N/cm² (jeweils Kohäsionsbruch).

c2)

In jeweils 20 g der Klebstoff-Paste aus Beisp. 4 b1) werden alternativ 3 g der nachstehenden Verdünnungsmittel eingerührt und die Verklebung wie in Beisp. 4 c1) mit der dort beschriebenen Härtung und Nachhärtung vorgenommen. Es werden nachstehende Zugscherfestigkeiten erhalten.

| Verdünnungsmitttel | Zugscherfestigkeit |
|---|---|
| Polyäthylenglykol, Molmasse ≈ 400 | 380[1] N/cm² |
| Tripropylenglykol | 400[1] N/cm² |
| Dimerfettsäure mit ca. 20 Gew.-% Trimeranteil (hergestellt durch Diels-Alder-Reaktion aus Linolsäure) | 412[1] N/cm² |

[1] Kohäsionsbruch

| | |
|---|---|
| Dimerfettsäure mit ca. 10 Gew.-% Trimeranteil (hergestellt durch Diels-Alder-Reaktion aus Linolsäure) | 400[1] N/cm² |
| Epoxidharz (kurzkettiges aromatisches Epoxidharz auf der Basis von Bisphenol A mit einem Epoxid-Äquivalentgewicht von 180 bis 190 g/Äquivalent) | 720[1] N/cm² |
| Epoxidharz (niederviskoses, vollständig polyfunktionelles Epoxidharz auf der Basis von Bisphenol A mit einer Viskosität nach DIN 53015 von 900 bis 1 300 mPa.s bei 25 °C und einem Epoxidäquivalentgewicht von 160 bis 178 g/Äquivalent) | 760[1] N/cm² |
| Cumaron/Inden-Harz (Viskosität bei 20 °C : 700 bis 1 200 mPa.s ; maximale Säurezahl : 0,3 mg KOH/g ; Helligkeit nach Barrett : 0,5 bis 1) | 526[1] N/cm² |
| Dioctylphthalat | 194[2] N/cm² |

[1] Kohäsionsbruch ; [2] Adhäsionsbruch

| | |
|---|---|
| Polybutadien/Maleinsäureanhydrid-Addukt mit 9 % Maleinsäureanhydrid (Molgewicht : 1800 ; Säurezahl : 85 mg KOH/g) | 390[1] N/cm² |
| Butadien/Acrylnitril-Oligomeres, carboxylgruppenterminiert (22 % Acrylnitril, Funktionalität : 2,3 ; Viskosität bei 27 °C : 350 000 mPa.s) | 540[1] N/cm² |

[1]) Kohäsionsbruch

c3)

In jeweils 18 g der Klebstoff-Paste aus Beisp. 4 b1) werden alternativ 2 g Mikrotalkum oder 2 g Leitfähigkeitsruß (Furnaceruß) eingearbeitet.

Die Verklebung von nichtentfettetem Stahlblech wird wie in Beisp. 1 c1) vorgenommen. Nach der Härtung im Umlufttrockenschrank 20 min. bei 150 °C und der Nachhärtung 20 min. bei 180 °C und 10 min. bei 210 °C beträgt die Zugscherfestigkeit für die Talkum-haltife Verklebung 540 N/cm² und für die Leitfähigkeitsruß enthaltende Verklebung 460 N/cm².

d1)

Zur Verwendung als Dichtungsmassen werden die Verdünnungsmittel- und Füllstoff-haltigen pastösen Produkte von Beisp. 4 c2) und c3) als raupenförmige Abdichtung auf die Kante der Bördelnaht eines nichtentfetteten Stahlbleches (St 37) aufgetragen und wie nachstehend gehärtet :

20 min. bei 150 °C, 20 min. bei 180 °C und 10 min. bei 210 °C.

Es werden elastische, nichtporöse und mit Ausnahme der Dioctylphthalat enthaltenden Dichtungsmassen auch ausgezeichnet haftende Bördelnahtabdichtungen erhalten.

## Beispiel 5

a) Herstellung des carboxylgruppenhaltigen Polyesters.

Analog zu der in den vorhergehenden Beispielen beschriebenen Verfahrensweise wird ein Polyester folgender Zusammensetzung hergestellt :

| Rohstoff: | Phthalsäure: | Terephthalsäure: | Dicarbonsäure-Gemisch*) | Ethylenglykol: |
|---|---|---|---|---|
| Mol-% | 20 | 19 | 61 / | 100 |

*) 28-33 Gew.-% Bernsteinsäure
40-45 Gew.-% Glutarsäure
24-28 Gew.-% Adipinsäure.

| | |
|---|---|
| OH-Zahl | 31 |
| Säurezahl | 0,6 |
| Viskosität 25 °C | 2 330 000 mPa.s. |

500 g dieses Polyesters wurden auf 130 °C erhitzt und mit 53,2 g geschmolzenem Trimellithsäureanhydrid versetzt. Die Mischung wurde noch weitere 60 min. bei 130 °C gerührt und unter Stickstoff abgefüllt.

Das Reaktionsprodukt hatte dann eine Säurezahl von 59 (Theorie : 56).

b) Herstellung und Verwendung eines reaktiven Schmelzklebstoffs

10 g des carboxylgruppenhaltigen Polyesters wurden auf 80 °C erwärmt und in der warmen Schmelze 1,08 g p-Phenylenbisoxazolin (p-PBO) in Pulverform eingerührt und sorgfältig homogenisiert. Diese Masse wurde mit einer Handrakel in einer Schichtdicke von 36 µm auf eine Polyesterfolie aufgebracht und sodann aus einer Entfernung von 30 cm mit einem Infrarotstrahler (2 kW Leistungsaufnahme) 30 sek. bestrahlt. Nach einer Lagerung von 24 Stunden wurden die Filme mittels einer normierten Gummiandruckwalze von 4,5 1b Auflagegewicht auf ein Stahlblech geklebt und nach den Vorschriften des Pressure Sensitive Tape Council PSTC-1/Schälfestigkeit und PSTC-7/Scherstandfestigkeit geprüft. In Abänderung der Originaltestmethode PSTC-1 wurde mit einer Geschwindigkeit von nur 100 mm/min abgezogen.

Die Scherfestigkeit wurde mit einer Belastung von 4,52 kg (= 10 lbs) geprüft. Die verklebte Fläche war jeweils 2,5 × 5,0 cm. Die Angaben sind jeweils der Mittelwert aus 2 Messungen.

| Schälfestigkeit : 16,75 N/2,5 cm (Adhäsivbruch) | Scherfestigkeit : mehr als 72 Stunden |
|---|---|

**Patentansprüche**

1. Wärmehärtbare Klebstoff- und Dichtungsmassen auf der Basis von Polyestern und bifunktionellen Oxazolinen, dadurch gekennzeichnet, daß sie aus

a) 70 bis 95 Gew.-%, vorzugsweise 80 bis 92 Gew.-%, Polyestern mit einer Glasübergangstemperatur unterhalb 20 °C, gegebenenfalls im Gemisch mit einem Polycarbonsäureanhydrid, vorzugsweise Trimellithsäureanhydrid,

b) 5 bis 30 Gew.-%, vorzugsweise 6 bis 18 Gew.-%, Polyoxazolinen, welche mindestens 2 Oxazolingruppen je Molekül enthalten, wobei die Polyoxazoline in den Polyestern suspendiert sind,

c) 0 bis 4 Gew.-%, vorzugsweise 1,5 bis 3 Gew.-%, Paraffin und

d) gegebenfalls zusätzlich 1 bis 50 Gew.-%, vorzugsweise 1 bis 20 Gew.-%, bezogen auf die Gesamtmenge der Bestandteile, reaktiven oder nichtreaktiven Verdünnungsmitteln und/oder Zuschlagstoffen

bestehen.

2. Wärmehärtbare Klebstoff- und Dichtungsmassen nach Anspruch 1, dadurch gekennzeichnet, daß die Komponente a) aus Polyestern besteht, welche im statistischen Mittel mindestens zwei Carboxylgruppen je Molekül enthalten, Säurezahlen von 20 bis 120, vorzugsweise 40 bis 80, mg KOH/g und eine Glasübergangstemperatur unterhalb 10 °C aufweisen.

3. Wärmehärtbare Kelbstoff- und Dichtungsmassen nach Anspruch 1, dadurch gekennzeichnet, daß die Komponente a) aus Polyestern, welche endständige Hydroxylgruppen enthalten, Hydroxylzahlen von 10 bis 60, vorzugsweise 20 bis 40, mg KOH/g sowie eine Glasübergangstemperatur unterhalb 10 °C aufweisen, und mindestens der zum Aufsäuern der endständigen Hydroxylgruppen erforderlichen Menge an Polycarbonsäureanhydrid, vorzugsweise Trimellithsäureanhydrid, besteht.

4. Wärmehärtbare Klebstoff- und Dichtungsmassen nach einem der Ansprüche 1 bis 3, dadurch gekennzeichnet, daß als Polyoxazoline p-Phenylenbisoxazolin, m-Plenylenbisoxazolin oder Tetramethylenbisoxazolin einzeln oder im Gemisch eingesetzt werden.

**Claims.**

1. Heat hardenable adhesive and sealing compositions based on polyesters and bifunctional oxazolines, characterised in that they consist of

a) 70 to 95 % by weight, preferably 80 to 92 % by weight, of polyesters with a glass transition temperature below 20 °C, optionally in admixture with a polycarboxylic acid anhydride, preferably trimellitic acid anhydride,

b) 5 to 30 % by weight, preferably 6 to 18 % by weight of polyoxazolines, which contain at least 2 oxazoline groups per molecule, with the polyoxazolines being suspended in the polyesters.

c) 0 to 4 % by weight, preferably 1.5 to 3 % by weight of paraffin and,

d) optionally additionally 1 to 50 % by weight, preferably 1 to 20 % by weight, related to the total amount of the constituents, of reactive or non-reactive diluents and/or additives.

2. Heat hardenable adhesive and sealing compositions according to claim 1, characterised in that component a) consists of polyesters which contain in the statistic mean at least two carboxyl groups per molecule, acid numbers of 20 to 120, preferably 40 to 80, mg KOH/g and a glass transition temperature below 10 °C.

3. Heat hardenable adhesive and sealing compositions according to claim 1, characterised in that component a) consists of polyesters which contain terminal hydroxyl groups, have hydroxyl numbers of 10 to 60, preferably 20 to 40, mg KOH/g as well as a glass transition temperature below 10 °C, and at least the amount of polycarboxylic acid anhydride, preferably trimellitic acid anhydride necessary for the acidification of the terminal hydroxyl groups.

4. Heat hardenable adhesive and sealing compositions according to one of claims 1 to 3, characterised in that p-phenylenebisoxazoline, m-phenylenebisoxazoline or tetramethylenebisoxazoline are employed singly or in mixture as polyoxazolines.

**Revendications**

1. Matières adhésives et d'étanchéité thermodurcissables à base de polyesters et d'oxazolines bifonctionnelles, caractérisées en ce qu'elles sont constituées par

a) 70 à 95 % en poids, de préférence 80 à 92 % en poids, de polyesters avec une température de transition vitreuse au-dessous de 20 °C, éventuellement en mélange avec un anhydride d'acide polycarboxylique, de préférence l'anhydride trimellitique,

b) 5 à 30 % en poids, de préférence 6 à 18 % en poids, de polyoxazolines contenant au moins 2 groupes oxazoline par molécule, les polyoxazolines se trouvant en suspension dans les polyesters,

c) 0 à 4 % en poids, de préférence 1,5 à 3 % en poids de paraffine et

d) éventuellement en supplément 1 à 50 % en poids, de préférence 1 à 20 % en poids, par rapport à la quantité totale des constituants, de diluants réactifs ou non réactifs et/ou d'additifs.

2. Matières adhésives et d'étanchéité thermodurcissables selon la revendication 1, caractérisées en ce que le composant a) est constitué par des polyesters qui contiennent, en moyenne statistique, au moins deux groupes carboxyles par molécule et possèdent des indices d'acide de 20 à 120, de préférence de 40 à 80 mg de KOH/g et une température de transition vitreuse au-dessous de 10 °C.

3. Matières adhésives et d'étanchéité thermodurcissables selon la revendication 1, caractérisées en ce que le composant a) est constitué par des polyesters qui contiennent des groupes hydroxyles terminaux, présentent des indices d'hydroxyle de 10 à 60, de préférence de 20 à 40 mg de KOH/g ainsi qu'une température de transition vitreuse au-dessous de 10 °C et contiennent au moins la quantité d'anhydride d'acide polycarboxylique nécessaire à l'acidification des groupes hydroxyles terminaux, de préférence l'anhydride trimellitique.

4. Matières adhésives et d'étanchéité thermodurcissables selon l'une des revendications 1 à 3, caractérisées en ce que la p-phénylènebisoxazoline, la m-phénylènebisoxazoline ou la tétraméthylènebisoxazoline sont utilisées seules ou en mélange en tant que polyoxazolines.